# FASCICULE DE BREVET EUROPEEN

(11) **EP 4 543 689 B1**
(45) Date de publication et mention de la délivrance du brevet: **13.05.2026**
(21) Numéro de dépôt: 23730833.3
(22) Date de dépôt: 19.06.2023
(51) Int. Cl.: B60C 1/00, C08F 210/02, C08F 236/04, C08L 23/08, C08K 3/06, C08K 5/47, C08L 7/00, C08L 93/04

(54) **COMPOSITION DE CAOUTCHOUC COMPRENANT UN ÉLASTOMÈRE DIÉNIQUE FORTEMENT SATURÉ**
KAUTSCHUKZUSAMMENSETZUNG MIT EINEM HOCHGESÄTTIGTEN DIENELASTOMER
RUBBER COMPOSITION COMPRISING A HIGHLY SATURATED DIENE ELASTOMER

(30) Priorité: 21.06.2022 FR 2206083
(43) Date de publication de la demande: 30.04.2025
(73) Titulaire: COMPAGNIE GENERALE DES ETABLISSEMENTS MICHELIN, 63000 Clermont-Ferrand (FR)
(72) Inventeur: FERRAND, Thomas, 63040 CLERMONT-FERRAND CEDEX 09 (FR); ARAUJO DA SILVA, José-Carlos, 63040 CLERMONT-FERRAND CEDEX 09 (FR); PRAS, Maxime, 63040 CLERMONT-FERRAND CEDEX 09 (FR)
(74) Mandataire: M.F.P. Michelin
(86) Numéro de dépôt international: PCT/EP2023/066378
(87) Numéro de publication internationale: WO 2023/247403

(56) Documents cités:
- FR-A1- 3 086 949
- FR-A1- 3 104 596

## Description

Le domaine de la présente invention est celui des compositions de caoutchouc comportant un élastomère diénique fortement saturé, en particulier des compositions destinées à être utilisées dans un pneumatique, plus particulièrement dans un flanc de pneumatique.

Les flancs d'un pneumatique sont exposés à la fois à l'action de l'ozone et à des cycles de déformation comme la flexion au cours du roulage du pneumatique. Les cycles de déformation conjugués à l'action de l'ozone peuvent faire apparaître des craquelures ou fissures dans le flanc, empêchant l'utilisation du pneumatique indépendamment de l'usure de la bande de roulement. Par conséquent, il est recherché des compositions de caoutchouc qui soient très cohésives pour constituer par exemple des flancs de pneumatique par leur capacité à subir de grandes déformations sans se rompre, même en la présence d'amorces de fissures.

Pour minimiser l'action de l'ozone sur des compositions de caoutchouc, il est connu d'utiliser des copolymères présentant une sensibilité moindre à l'oxydation, comme par exemple les élastomères diéniques fortement saturés, élastomères comprenant des unités éthylène à un taux molaire supérieur à 50% des unités monomères de l'élastomère. L'utilisation de copolymères d'éthylène et de 1,3-diène dans une composition pour flanc est aussi par exemple décrite dans le document EP 2 682 423 A1 pour augmenter la résistance à l'ozone. Néanmoins, il apparaît une déchéance des propriétés de cohésion de la composition de caoutchouc dès lors que le taux molaire d'éthylène dans le copolymère est supérieur à 50%.

Par ailleurs, des compositions de caoutchouc diénique comprenant des copolymères d'éthylène et de 1,3-butadiène , une fois réticulées, peuvent présenter une rigidité bien plus élevée que les compositions de caoutchouc diénique traditionnellement utilisées comme cela ressort du document WO 2014/114607 A1. Toutefois, cette rigidité accrue, bien que favorable à une résistance à l'usure améliorée pour une utilisation en bande de roulement, peut parfois s'avérer inappropriées pour certaines applications.

Il a donc été recherché de diminuer la rigidité à cuit de telles compositions comprenant un caoutchouc diénique à base d'éthylène. Pour cela, il est connu de diminuer la densité pontale de la composition de caoutchouc. Toutefois, cette solution s'accompagne d'une augmentation de l'hystérèse de la composition de caoutchouc ce qui est préjudiciable pour la résistance au roulement. Le document WO 2021/053296 A1 a fourni une solution permettant de diminuer la rigidité à cuit de compositions comprenant un caoutchouc diénique à base d'éthylène sans pénaliser l'hystérèse en utilisant des compositions de caoutchouc qui comprennent un copolymère d'éthylène et d'un 1,3-diène de formule CH₂=CR-CH=CH₂, le symbole R représentant une chaîne hydrocarbonée ayant 3 à 20 atomes de carbone. FR 3 086 949 décrit une composition de caoutchouc à base de caoutchouc naturel, d'un copolymère d'éthylène et d'un 1,3-diène, d'un noir de carbone, d'un plastifiant et d'un système de réticulation présentant une bonne résistance à la déchirabilité.

Il serait donc intéressant pour les manufacturiers de pneumatiques de disposer de compositions de caoutchouc, utilisables notamment dans les flancs, présentant une résistance améliorée à la propagation de fissures, de préférence en diminuant également la rigidité.

Poursuivant ses recherches, la Demanderesse a découvert de manière inattendue que l'utilisation d'un plastifiant liquide spécifique dans une composition à base de copolymère spécifique contenant des unités éthylène et d'un 1,3-diène permet de résoudre le problème technique précité.

Ainsi l'invention a pour objet une composition de caoutchouc à base d'au moins :
- 20 à 50 pce de copolymère contenant des unités éthylène et des unités d'un 1,3-diène de formule (I), les unités éthylène dans le copolymère représentant entre 50% et 95% en mole des unités monomères du copolymère,

   CH₂=CR-CH=CH₂ (I)

   le symbole R représentant une chaîne hydrocarbonée ayant 3 à 20 atomes de carbone ;
- 50 à 80 pce de polyisoprène comportant un taux massique de liaisons 1,4-cis d'au moins 90% de la masse du polyisoprène ;
- une charge renforçante ;
- un plastifiant ester d'huile de tall ; et
- un système de vulcanisation.

L'invention a également pour objet un article en caoutchouc comprenant une composition selon l'invention, en particulier un bandage pneumatique dont au moins un flanc comprend une composition selon l'invention.

### I- DÉFINITIONS

Par l'expression « à base de » utilisée pour définir les constituants d'un système catalytique, on entend le mélange de ces constituants, ou le produit de la réaction d'une partie ou de la totalité de ces constituants entre eux.

Par l'expression « composition à base de », il faut entendre une composition comportant le mélange et/ou le produit de réaction *in situ* des différents constituants utilisés, certains de ces constituants pouvant réagir et/ou étant destinés à réagir entre eux, au moins partiellement, lors des différentes phases de fabrication de la composition ; la composition pouvant ainsi être à l'état totalement ou partiellement réticulé ou à l'état non-réticulé.

Par « matrice élastomère », on entend l'ensemble des élastomères de la composition, y compris le copolymère défini ci-dessous.

Sauf indication contraire, les taux des unités résultant de l'insertion d'un monomère dans un copolymère sont exprimés en pourcentage molaire par rapport à la totalité des unités monomères du copolymère.

Par l'expression « partie en poids pour cent parties en poids d'élastomère » (ou pce), il faut entendre au sens de la présente invention, la partie, en masse pour cent parties en masse de la matrice élastomère.

D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b). Dans la présente, lorsqu'on désigne un intervalle de valeurs par l'expression "de a à b", on désigne également et préférentiellement l'intervalle représenté par l'expression "entre a et b".

Lorsqu'on fait référence à un composé "majoritaire", on entend au sens de la présente invention, que ce composé est majoritaire parmi les composés du même type dans la composition, c'est-à-dire que c'est celui qui représente la plus grande quantité en masse parmi les composés du même type. Ainsi, par exemple, un élastomère majoritaire est l'élastomère représentant la plus grande masse par rapport à la masse totale des élastomères dans la composition. De la même manière, une charge dite majoritaire est celle représentant la plus grande masse parmi les charges de la composition. A titre d'exemple, dans un système comprenant un seul élastomère, celui-ci est majoritaire au sens de la présente invention ; et dans un système comprenant deux élastomères, l'élastomère majoritaire représente plus de la moitié de la masse des élastomères. Au contraire, un composé "minoritaire" est un composé qui ne représente pas la fraction massique la plus grande parmi les composés du même type. De préférence par majoritaire, on entend présent à plus de 50%, de préférence plus de 60%, 70%, 80%, 90%, et plus préférentiellement le composé « majoritaire » représente 100%.

Les composés mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse. De la même manière, les composés mentionnés peuvent également provenir du recyclage de matériaux déjà utilisés, c'est-à-dire qu'ils peuvent être, partiellement ou totalement, issus d'un procédé de recyclage, ou encore obtenus à partir de matières premières elles-mêmes issues d'un procédé de recyclage. Sont concernés notamment les polymères, les plastifiants, les charges, etc.

Sauf indications contraires, toutes les valeurs de température de transition vitreuse « Tg » décrite dans la présente sont mesurées de manière connue par DSC (Differential Scanning Calorimetry) selon la norme ASTM D3418 (1999).

### II- DESCRIPTION DE L'INVENTION

### II-1 Matrice élastomère

La composition selon l'invention est à base d'au moins :
- 20 à 50 pce d'au moins un copolymère contenant des unités éthylène et des unités d'un 1,3-diène de formule (I), les unités éthylène dans le copolymère représentant entre 50% et 95% en mole des unités monomères du copolymère,

   CH₂=CR-CH=CH₂ (I)

   le symbole R représentant une chaîne hydrocarbonée ayant 3 à 20 atomes de carbone ;
- 50 à 80 pce de polyisoprène comportant un taux massique de liaisons 1,4-cis d'au moins 90% de la masse du polyisoprène .

Dans la présente, sauf indication contraire, l'expression « le copolymère » désigne « l'au moins un copolymère contenant des unités éthylène et des unités d'un 1,3-diène de formule (I), les unités éthylène dans le copolymère représentant entre 50% et 95% en mole des unités, CH₂=CR-CH=CH₂ (I), le symbole R représentant une chaîne hydrocarbonée ayant 3 à 20 atomes de carbone » pour un souci de simplification de rédaction.

Le 1,3-diène de formule (I) est un 1,3 diène substitué, qui peut donner lieu à des unités de configuration 1,2 représentée par la formule (1), de configuration 3,4 représentée par la formule (2) et de configuration 1,4 dont la forme trans est représentée ci-après par la formule (3).

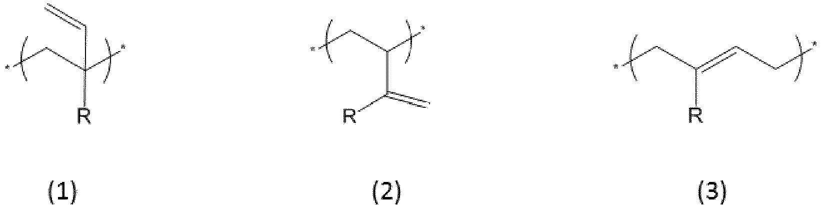

Comme cela est également bien connu, l'unité éthylène est une unité de motif « -(CH₂-CH₂)- ».

Le copolymère utile aux besoins de l'invention est un copolymère contenant des unités d'éthylène et du 1,3-diène de formule (I), ce qui implique que des unités monomères du copolymère sont des unités résultant de la polymérisation de l'éthylène et du 1,3-diène de formule (I). Le copolymère comprend donc des unités éthylène et des unités du 1,3-diène de formule (I). Selon l'invention, le 1,3-diène peut être un seul composé, c'est-à-dire un seul (en anglais « one ») 1,3-diène de formule (I) ou être un mélange de 1,3-diènes de formule (I), les 1,3-diènes du mélange se différenciant les uns des autres par le groupe représenté par le symbole R.

Le copolymère utile aux besoins de l'invention est avantageusement un copolymère statistique selon l'un quelconque des modes de réalisation de l'invention. Très avantageusement, le copolymère est un polymère atactique selon l'un quelconque des modes de réalisation de l'invention.

Dans la formule (I) du 1,3-diène, la chaîne hydrocarbonée représentée par le symbole R est une chaîne insaturée de 3 à 20 atomes de carbone. De préférence, le symbole R représente une chaîne hydrocarbonée ayant 6 à 16 atomes de carbone.

La chaîne hydrocarbonée représentée par le symbole R peut être une chaîne saturée ou insaturée. De préférence, le symbole R représente une chaîne aliphatique, auquel cas dans la formule (I) du 1,3-diène, la chaîne hydrocarbonée représentée par le symbole R est une chaîne hydrocarbonée aliphatique. Elle peut être une chaîne linéaire ou ramifiée, auquel cas le symbole R représente une chaîne linéaire ou ramifiée. De préférence, la chaîne hydrocarbonée est acyclique, auquel cas le symbole R représente une chaîne acyclique. De préférence encore, le symbole R représente une chaîne hydrocarbonée acyclique insaturée et ramifiée. Ainsi, la chaîne hydrocarbonée représentée par le symbole R est avantageusement une chaîne acyclique insaturée et ramifiée contenant de 3 à 20 atomes de carbone, en particulier de 6 à 16 atomes de carbone. Très avantageusement, le 1,3-diène est le myrcène, le β-farnésène ou un mélange de myrcène et de β-farnésène. Encore plus avantageusement, le 1,3-diène est le myrcène.

Avantageusement, le copolymère contient des unités du 1,3-diène de formule (I) qui représentent entre 10% et 40%, de préférence entre 15% et 30%, en moles des unités monomères du copolymère.

Avantageusement également, le copolymère contient des unités éthylène qui représentent de 60% à 90% en moles des unités monomères du copolymère, c'est-à-dire de 60% à 90% en moles des unités éthylène et des unités 1,3-diène. De manière très préférentielle, le copolymère contient des unités éthylène qui représentent de 70% à 85% en moles, des unités monomères du copolymère.

Le copolymère peut comprendre un deuxième 1,3-diène choisi parmi le 1,3-butadiène, l'isoprène ou leur mélange. Dans ce cas, le copolymère est un copolymère d'éthylène, d'un 1,3-diène de formule (I) et d'un deuxième 1,3-diène choisi parmi le 1,3-butadiène, l'isoprène ou leur mélange, les unités monomères du copolymère sont des unités résultant de la polymérisation de l'éthylène, du 1,3-diène de formule (I) et du deuxième 1,3-diène. Le copolymère peut ainsi comprendre des unités éthylène, des unités du 1,3-diène de formule (I) et des unités du deuxième 1,3-diène. Avantageusement, le deuxième 1,3-diène du copolymère est le 1,3-butadiène.

Lorsque le copolymère contient des unités du deuxième 1,3-diène, ceux-ci représentent avantageusement entre 1% et 49%, de préférence entre 4% et 29%, de préférence entre 4% et 25%, en moles des unités monomères du copolymère.

Selon un mode de réalisation de l'invention, le copolymère contient plus de 60% à 90% en mole d'unités éthylène et au plus 20% en mole, préférentiellement au plus 15% en mole d'unités du 1,3-diène de formule (I). Selon ce mode de réalisation de l'invention, le copolymère contient préférentiellement moins de 30% en mole d'unités du deuxième 1,3-diène ou contient préférentiellement moins de 20% en mole d'unités du deuxième 1,3-diène.

Lorsque le deuxième 1,3-diène est le 1,3-butadiène ou un mélange de 1,3-butadiène et d'isoprène, le copolymère peut contenir en outre des unités de motif 1,2-cyclohexanediyle. La présence de ces structures cycliques dans le copolymère résulte d'une insertion très particulière de l'éthylène et de 1,3-butadiène lors de la polymérisation. La teneur en unités de motif 1,2-cyclohexanediyle dans le copolymère varie selon les teneurs respectives en éthylène et en 1,3-butadiène dans le copolymère. Le copolymère contient de préférence moins de 15% en mole d'unités de motif 1,2-cyclohexanediyle.

De préférence, le copolymère présente une température de transition de vitreuse inférieure à -35°C, de préférence comprise entre -90°C et -35°C, de préférence encore entre -70°C et -35°C.

Le copolymère peut être préparé par un procédé qui comprend la copolymérisation d'éthylène, du 1,3-diène de formule (I) et de l'éventuel deuxième 1,3-diène, en présence d'un système catalytique à base au moins d'un métallocène de formule (II) et d'un organomagnésien de formule (III)

P(Cp¹Cp²) Nd(BH₄)_{(1+y)-}L_{y}-Nₓ (II)

MgR¹R² (III)

dans lesquels :
- Cp¹ et Cp², identiques ou différents, étant choisis dans le groupe constitué par le groupe cyclopentadiényle de formule C₅H₄ , le groupe fluorényle non substitué de formule C₁₃H₈ et les groupes fluorényles substitués,
- P étant un groupe pontant les deux groupes Cp¹ et Cp² et représentant un groupe ZR³R⁴, Z représentant un atome de silicium ou de carbone, R³ et R⁴, identiques ou différents, représentant chacun un groupe alkyle comprenant de 1 à 20 atomes de carbone, de préférence un méthyle,
- y, nombre entier, étant égal ou supérieur à 0,
- x, nombre entier ou non, étant égal ou supérieur à 0,
- L représentant un métal alcalin choisi dans le groupe constitué par le lithium, le sodium et le potassium,
- N représentant une molécule d'un éther, de préférence diéthyléther ou tétrahydrofuranne,
- R¹ et R², identiques ou différents, représentant un groupe carboné.

A titre de groupes fluorényles substitués, on peut citer ceux substitués par des radicaux alkyles ayant 1 à 6 atomes de carbone ou par des radicaux aryles ayant 6 à 12 atomes de carbone. Le choix des radicaux est aussi orienté par l'accessibilité aux molécules correspondantes que sont les fluorènes substitués, parce que ces derniers sont disponibles commercialement ou facilement synthétisables.

A titre de groupes fluorényles substitués, on peut citer plus particulièrement les groupes 2,7-ditertiobutyle-fluorényle et 3,6-ditertiobutyle-fluorényle. Les positions 2, 3, 6 et 7 désignent respectivement la position des atomes de carbone des cycles comme cela est représenté dans le schéma ci-après, la position 9 correspondant à l'atome de carbone auquel est attaché le pont P.

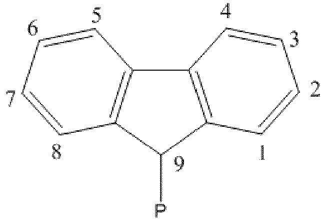

Le système catalytique peut être préparé de façon traditionnelle par un procédé analogue à celui décrit dans la demande de brevet WO 2007054224 ou WO 2007054223. Par exemple on fait réagir dans un solvant hydrocarboné l'organomagnésien et le métallocène typiquement à une température allant de 20 à 80°C pendant une durée comprise entre 5 et 60 minutes. Le système catalytique est généralement préparé dans un solvant hydrocarboné, aliphatique comme le méthylcyclohexane ou aromatique comme le toluène. Généralement après sa synthèse, le système catalytique est utilisé en l'état dans le procédé de synthèse du copolymère conforme à l'invention.

Alternativement, le système catalytique peut être préparé par un procédé analogue à celui décrit dans la demande de brevet WO 2017093654 A1 ou dans la demande de brevet WO 2018020122 A1. Selon cette alternative, le système catalytique contient en outre un monomère de préformation choisi parmi un diène conjugué, l'éthylène ou un mélange d'éthylène et d'un diène conjugué, auquel cas le système catalytique est à base au moins du métallocène, de l'organomagnésien et du monomère de préformation. Par exemple on fait réagir dans un solvant hydrocarboné l'organomagnésien et le métallocène typiquement à une température de 20 à 80°C pendant 10 à 20 minutes pour obtenir un premier produit de réaction, puis avec ce premier produit de réaction on fait réagir à une température allant de 40 à 90°C pendant 1h à 12h le monomère de préformation choisi parmi un diène conjugué, l'éthylène ou un mélange d'éthylène et d'un diène conjugué. Le diène conjugué à titre de monomère de préformation est de préférence un 1,3-diène tel que le 1,3-butadiène, l'isoprène ou encore un 1,3-diène de formule (I), en particulier le myrcène ou le β-farnésène. Le système catalytique ainsi obtenu peut être utilisé de suite dans le procédé conforme à l'invention ou être stocké sous atmosphère inerte avant son utilisation dans le procédé conforme à l'invention.

Le métallocène utilisé pour préparer le système catalytique peut se trouver sous la forme de poudre cristallisée on non, ou encore sous la forme de monocristaux. Le métallocène peut se présenter sous une forme monomère ou dimère, ces formes dépendant du mode de préparation du métallocène, comme par exemple cela est décrit dans la demande de brevet WO 2007054224 ou WO 2007054223. Le métallocène peut être préparé de façon traditionnelle par un procédé analogue à celui décrit dans la demande de brevet WO 2007054224 ou WO 2007054223, notamment par réaction dans des conditions inertes et anhydres du sel d'un métal alcalin du ligand avec un borohydrure de terre rare dans un solvant adapté, tel un éther, comme le diéthyléther ou le tétrahydrofuranne ou tout autre solvant connu de l'homme de l'art. Après réaction, le métallocène est séparé des sous-produits de réaction par les techniques connues de l'homme de l'art, telles que la filtration ou la précipitation dans un second solvant. Le métallocène est au final séché et isolé sous forme solide.

Comme toute synthèse faite en présence de composé organométallique, la synthèse du métallocène et celle du système catalytique ont lieu dans des conditions anhydres sous atmosphère inerte. Typiquement, les réactions sont conduites à partir de solvants et de composés anhydres sous azote ou argon anhydre.

L'organomagnésien utile aux besoins de l'invention est de formule MgR¹R² dans laquelle R¹ et R², identiques ou différents, représentent un groupe carboné. On entend par groupe carboné un groupe qui contient un ou plusieurs atomes de carbone. De préférence, R¹ et R² contiennent 2 à 10 atomes de carbone. De manière plus préférentielle, R¹ et R² représentent chacun un alkyle. L'organomagnésien est avantageusement un dialkylmagnésien, mieux le butyléthylmagnésium ou le butyloctylmagnésium, encore mieux le butyloctylmagnésium.

Selon l'un quelconque des modes de réalisation de l'invention, le rapport molaire de l'organomagnésien sur le métal Nd constituant le métallocène est de préférence compris dans un domaine allant de 1 à 100, de manière plus préférentielle est supérieur ou égal à 1 et inférieur à 10. La plage de valeurs allant de 1 à moins de 10 est notamment plus favorable pour l'obtention de copolymères de masses molaires élevées.

Lorsque le copolymère utile aux besoins de l'invention est un copolymère qui a une microstructure telle que définie selon la première variante de l'invention, il est préparé selon le procédé mentionné dans la présente demande en utilisant un métallocène de formule (II) dans laquelle Cp¹ et Cp², identiques ou différents, sont choisis dans le groupe constitué par les groupes fluorényles substitués et le groupe fluorényle non substitué de formule C₁₃H₈. Pour cette variante, conviennent en particulier les métallocènes de formules suivantes dans lesquelles le symbole Flu présente le groupe fluorényle de formule C₁₃H₈ : [{Me₂SiFlu₂Nd(µ-BH₄)₂Li(THF)}_{2]} ; [Me₂SiFlu₂Nd(µ-BH₄)₂Li(THF)]; [Me₂SiFlu₂Nd(µ-BH₄)(THF)] ; [{Me₂SiFlu₂Nd(µ-BH₄)(THF)}₂] ; [Me₂SiFlu₂Nd(µ-BH₄)].

L'homme du métier sait adapter aussi les conditions de polymérisation et les concentrations en chacun des réactifs (constituants du système catalytique, monomères) selon le matériel (outils, réacteurs) utilisé pour conduire la polymérisation et les différentes réactions chimiques. Comme cela est connu de l'homme du métier, la copolymérisation ainsi que la manipulation des monomères, du système catalytique et du ou des solvants de polymérisation se font dans des conditions anhydres et sous atmosphère inerte. Les solvants de polymérisation sont typiquement des solvants hydrocarbonés, aliphatiques ou aromatiques.

La polymérisation est conduite de préférence en solution, en continu ou discontinu. Le solvant de polymérisation peut être un solvant hydrocarboné, aromatique ou aliphatique. A titre d'exemple de solvant de polymérisation, on peut citer le toluène et le méthylcyclohexane. Les monomères peuvent être introduits dans le réacteur contenant le solvant de polymérisation et le système catalytique ou inversement le système catalytique peut être introduit dans le réacteur contenant le solvant de polymérisation et les monomères. La copolymérisation est conduite typiquement dans des conditions anhydres et en l'absence d'oxygène, en présence éventuelle d'un gaz inerte. La température de polymérisation varie généralement dans un domaine allant de 30 à 150°C, préférentiellement de 30 à 120°C. De préférence, la copolymérisation est conduite à pression constante d'éthylène.

Au cours de la polymérisation de l'éthylène, du 1,3-diène de formule (I) et de l'éventuel deuxième 1,3-diène, dans un réacteur de polymérisation, un ajout continu d'éthylène et du 1,3-diène de formule (I) et de l'éventuel deuxième 1,3-diène, peut être réalisé dans le réacteur de polymérisation, auquel cas le réacteur de polymérisation est un réacteur alimenté. Ce mode de réalisation est tout particulièrement adapté pour la synthèse de copolymère statistique.

La polymérisation peut être stoppée par refroidissement du milieu de polymérisation. Le polymère peut être récupéré selon les techniques classiques connues de l'homme du métier comme par exemple par précipitation, par évaporation du solvant sous pression réduite ou par stripping à la vapeur d'eau.

Le taux du copolymère est avantageusement compris dans un domaine allant de 20 à 45 pce, de préférence de 31 à 45 pce. Il est entendu que le copolymère peut être constitué par un mélange de copolymères qui se différencient par leur microstructure ou par leur macrostructure. Par ailleurs, le taux de polyisoprène comportant un taux massique de liaisons 1,4-cis d'au moins 90% de la masse du polyisoprène est avantageusement compris dans un domaine allant de 55 à 80 pce, de préférence de 55 à 69 pce.

Avantageusement, le polyisoprène comporte un taux massique de liaisons 1,4-cis d'au moins 98% de la masse du polyisoprène.

De préférence, le polyisoprène est choisi dans le groupe constitué par le caoutchouc naturel (NR), les polyisoprènes de synthèse (IR) et leurs mélanges. De préférence encore, le polyisoprène est un caoutchouc naturel.

De manière particulière préférée, le taux total du copolymère et du polyisoprène est compris dans un domaine allant de 90 à 100 pce, de préférence de 95 à 100 pce. De préférence le taux total du copolymère et du polyisoprène est de 100 pce, c'est-à-dire que le copolymère et le polyisoprène sont les seuls élastomères de la composition.

### II-2 Charge renforçante

La composition selon l'invention est à base d'au moins une charge renforçante. Une telle charge renforçante consiste typiquement en des nanoparticules dont la taille moyenne (en masse) est inférieure au micromètre, généralement inférieure à 500 nm, le plus souvent comprise entre 20 et 200 nm, en particulier et plus préférentiellement comprise entre 20 et 150 nm.

La charge renforçante peut comprendre du noir de carbone, de la silice ou un de leurs mélanges. Avantageusement, la charge renforçante de la composition selon l'invention comprend plus de 50% en masse, de préférence plus de 80% en masse, de noir de carbone. De préférence encore la charge renforçante est exclusivement constituée de noir de carbone, c'est-à-dire que le noir de carbone représente 100% en masse de la charge renforçante.

Comme noirs de carbone conviennent tous les noirs de carbone, notamment les noirs conventionnellement utilisés dans les pneumatiques ou leurs bandes de roulement. Parmi ces derniers, on citera plus particulièrement les noirs de carbone renforçants des séries 100, 200, 300, ou les noirs de série 500, 600 ou 700 (grades ASTM D-1765-2017), comme par exemple les noirs N115, N134, N234, N326, N330, N339, N347, N375, N550, N683, N772. Ces noirs de carbone peuvent être utilisés à l'état isolé, tels que disponibles commercialement, ou sous tout autre forme, par exemple comme support de certains des additifs de caoutchouterie utilisés. Les noirs de carbone pourraient être par exemple déjà incorporés à l'élastomère diénique, notamment isoprénique sous la forme d'un mélange-maître (« masterbatch » en anglais) (voir par exemple demandes WO97/36724-A2 ou WO99/16600-A1).

Parmi les noirs de carbone précités, ceux présentant une surface spécifique BET comprise dans un domaine allant de 21 à 69 m²/g, de préférence de 33 à 60 m²/g, de préférence de 40 à 49 m²/g, sont particulièrement préférés.

Ainsi, de préférence, la charge renforçante comprend plus de 50% en poids, de préférence plus de 80% en poids, d'au moins un noir de carbone présentant une surface spécifique BET comprise dans un domaine allant de 21 à 69 m²/g, de préférence de 33 à 60 m²/g, de préférence de 40 à 49 m²/g. La surface spécifique BET des noirs de carbone est mesurée selon la norme ASTM D6556-10 [méthode multipoints (au minimum 5 points) - gaz : azote - domaine de pression relative P/P0 : 0,1 à 0,3].

Comme silices conviennent tout type de silice précipitée, notamment des silices précipitées hautement dispersibles (dites « HDS » pour « highly dispersible » ou « highly dispersible silica »). Ces silices précipitées, hautement dispersibles ou non, sont bien connues de l'homme du métier. On peut citer, par exemple, les silices décrites dans les demandes WO03/016215-A1 et WO03/016387-A1. Parmi les silices HDS commerciales, on peut notamment utiliser les silices « Ultrasil ^{®} 5000GR », « Ultrasil ^{®} 7000GR » de la société Evonik, les silices « Zeosil ^{®} 1085GR», « Zeosil^{®} 1115 MP », « Zeosil^{®} 1165MP », « Zeosil^{®} Premium 200MP », « Zeosil^{®} HRS 1200 MP » de la Société Solvay. À titre de silice non HDS, les silices commerciales suivantes peuvent être utilisées : les silices « Ultrasil ^{®} VN2GR », « Ultrasil ^{®} VN3GR » de la société Evonik, la silice « Zeosil^{®} 175GR » » de la société Solvay, les silices « Hi-Sil EZ120G(-D) », « Hi-Sil EZ160G(-D) », « Hi-Sil EZ200G(-D) », « Hi-Sil 243LD », « Hi-Sil 210 », « Hi-Sil HDP 320G » de la société PPG.

Pour coupler la silice à l'élastomère diénique, on peut utiliser de manière bien connue un agent de couplage (ou agent de liaison) au moins bifonctionnel destiné à assurer une connexion suffisante, de nature chimique et/ou physique, entre la charge inorganique (surface de ses particules) et l'élastomère diénique. On utilise en particulier des organosilanes ou des polyorganosiloxanes au moins bifonctionnels. Par « bifonctionnel », on entend un composé possédant un premier groupe fonctionnel capable d'interagir avec la charge inorganique et un second groupe fonctionnel capable d'interagir avec l'élastomère diénique. Par exemple, un tel composé bifonctionnel peut comprendre un premier groupe fonctionnel comprenant un atome de silicium, ledit premier groupe fonctionnel étant apte à interagir avec les groupes hydroxyles d'une charge inorganique et un second groupe fonctionnel comprenant un atome de soufre, ledit second groupe fonctionnel étant apte à interagir avec l'élastomère diénique.

Préférentiellement, lorsqu'ils sont utilisés, les organosilanes sont choisis dans le groupe constitué par les organosilanes polysulfurés (symétriques ou asymétriques) tels que le tétrasulfure de bis(3-triéthoxysilylpropyl), en abrégé TESPT commercialisé sous la dénomination « Si69 » par la société Evonik ou le disulfure de bis-(triéthoxysilylpropyle), en abrégé TESPD commercialisé sous la dénomination « Si75 » par la société Evonik, les polyorganosiloxanes, les mercaptosilanes, les mercaptosilanes bloqués, tels que l'octanethioate de S-(3-(triéthoxysilyl)propyle) commercialisé par la société Momentive sous la dénomination « NXT Silane ». Plus préférentiellement, l'organosilane est un organosilane polysulfuré.

Lorsque qu'un agent de couplage de la silice à l'élastomère est utilisé, la teneur en agent de couplage peut aisément être ajustée par l'homme du métier. Typiquement le taux d'agent de couplage représente de 0,5% à 15% en poids par rapport à la quantité de silice.

Le taux de charge renforçante peut facilement être ajusté par l'homme du métier en fonction de l'usage de la composition de caoutchouc. Avantageusement, le taux de charge renforçante, dans la composition selon l'invention, est compris dans un domaine allant de 15 à 80 pce, de préférence de 20 à 55 pce, de préférence encore de 25 à 45 pce.

De préférence, le taux de noir de carbone, dans la composition selon l'invention, est compris dans un domaine allant de 15 à 80 pce, de préférence de 20 à 55 pce, de préférence encore de 25 à 45 pce, et la composition ne comprend pas de charge autre que du noir de carbone ou en comprend moins de 10 pce, de préférence moins de 5 pce, de préférence encore la composition ne comprend pas de charge autre que du noir de carbone.

### II-3 Système plastifiant

Selon l'invention, la composition comprend au moins un plastifiant ester d'huile de tall (aussi appelée « tallate »).

Le plastifiant ester d'huile de tall est de préférence un composé de formule Tl(OR¹)₃ dans lequel R¹ est un alkyl linéaire ou branché et Tl représente l'huile de tall (ou tallate). De préférence, R¹ est un alkyl comprenant de 4 à 20 atomes de carbone, de préférence de 6 à 12 atomes de carbone et plus préférentiellement de 6 à 10 atomes de carbone. De préférence encore, le radical R¹ est un alkyl ramifié, et de façon très préférentielle, R est un radical isooctyle.

De façon très préférentielle, le plastifiant ester d'huile de tall est le composé isooctyle tallate, [Chem 1] ci-dessous.

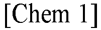

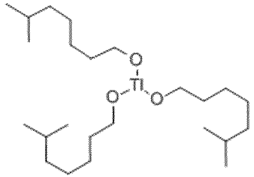

L'isooctyle tallate, de numéro CAS 68333-78-8, présente une température de transition vitreuse de -110°C et il est par exemple commercialisé sous la dénomination « Plasthall 100 » par la société Hallstar.

Bien entendu, le plastifiant ester d'huile de tall peut être un mélange de plusieurs plastifiants ester d'huile de tall.

De préférence pour les besoins de l'invention, le plastifiant ester d'huile de tall est présent dans la composition à un taux compris dans un domaine allant de 5 à 50 pce, de préférence de 7 à 40 pce et plus préférentiellement de 8 à 30 pce.

Selon l'invention, la composition peut comprendre un plastifiant liquide autre que le plastifiant ester d'huile de tall, mais cela n'est ni obligatoire ni préféré. Par définition, un plastifiant liquide est liquide à température ambiante (20°C, 1 atm).

Lorsque la composition comprend un autre plastifiant liquide, le taux total de plastifiant liquide est de préférence compris dans un domaine allant de 5 à 150 pce, de préférence de 10 à 100 pce.

De préférence, la composition ne comprend pas de plastifiant liquide autre que le plastifiant ester d'huile de tall ou en comprend moins de 30 pce, de préférence moins de 15 pce, de préférence moins de 10 pce. De préférence encore, la composition ne comprend pas de plastifiant liquide autre que le plastifiant ester d'huile de tall.

### II-4 Système de réticulation

Le système de réticulation de la composition conforme à l'invention est un système de vulcanisation, c'est-à-dire un système de réticulation à base de soufre.

Le soufre peut être apporté sous toute forme, notamment sous forme de soufre moléculaire, ou d'un agent donneur de soufre. L'homme du métier sait adapter la quantité d'agent donneur de soufre pour obtenir la quantité souhaitée de soufre dans la composition. De préférence, le soufre est apporté sous forme de soufre moléculaire.

Au moins un accélérateur de vulcanisation est également présent et, de manière optionnelle, et préférentielle, on peut utiliser divers activateurs de vulcanisation connus tels qu'oxyde de zinc, acide stéarique ou composé équivalent tel que les sels d'acide stéarique et sels de métaux de transition, dérivés guanidiques (en particulier diphénylguanidine), ou encore des retardateurs de vulcanisation connus.

Le soufre est utilisé à un taux préférentiel compris entre 0,5 et 12 pce, en particulier entre 1 et 10 pce. L'accélérateur de vulcanisation est utilisé à un taux préférentiel compris entre 0,5 et 10 pce, plus préférentiellement compris entre 0,5 et 5,0 pce. De préférence encore, la composition comprend de 0,6 à 2 pce, de préférence de 0,7 à 1,8 pce de soufre et de 0,6 à 1 pce, de préférence de 0,6 à 0,9 pce d'au moins un accélérateur de vulcanisation.

Le rapport massique de soufre sur accélérateur de vulcanisation peut être compris dans un domaine allant de 0,75 à 3,00, de préférence de 1,00 à 2,75, de préférence encore de 1,30 à 2,33.

On peut utiliser comme accélérateur tout composé susceptible d'agir comme accélérateur de vulcanisation des élastomères diéniques en présence de soufre, notamment des accélérateurs du type thiazoles ainsi que leurs dérivés, des accélérateurs de types sulfénamides, thiurames, dithiocarbamates, dithiophosphates, thiourées et xanthates. A titre d'exemples de tels accélérateurs, on peut citer notamment les composés suivants : disulfure de 2-mercaptobenzothiazyle (en abrégé "MBTS"), N-cyclohexyl-2-benzothiazyle sulfénamide ("CBS"), N,N-dicyclohexyl-2-benzothiazyle sulfénamide ("DCBS"), N-ter-butyl-2-benzothiazyle sulfénamide ("TBBS"), N-ter-butyl-2-benzothiazyle sulfénimide ("TBSI"), disulfure de tetrabenzylthiurame ("TBZTD"), dibenzyldithiocarbamate de zinc ("ZBEC") et les mélanges de ces composés.

Avantageusement, l'accélérateur de vulcanisation est choisi parmi les accélérateurs de type sulfénamide et leurs mélanges, de préférence choisi dans le groupe constitué par le CBS, le TBBS, le DCBS et leurs mélanges. De manière particulièrement avantageuse, l'accélérateur de vulcanisation est le CBS. Avantageusement, également, la composition ne comprend pas d'accélérateur de vulcanisation autre que des accélérateurs de type sulfénamide, de préférence autre que le CBS.

### II-5 Additifs possibles

Les compositions de caoutchouc selon l'invention peuvent comporter optionnellement également tout ou partie des additifs usuels habituellement utilisés dans les compositions d'élastomères pour pneumatique, comme par exemple des plastifiants (tels que des huiles plastifiantes et/ou des résines plastifiantes), des pigments, des agents de protection tels que cires anti-ozone, anti-ozonants chimiques, anti-oxydants, des agents anti-fatigue, etc.

### II-6 Préparation des compositions de caoutchouc

Les compositions utilisables dans le cadre de la présente invention peuvent être fabriquées dans des mélangeurs appropriés, en utilisant deux phases de préparation successives bien connues de l'homme du métier :
- une première phase de travail ou malaxage thermomécanique (phase dite « non-productive »), qui peut être conduite en une seule étape thermomécanique au cours de laquelle on introduit, dans un mélangeur approprié tel qu'un mélangeur interne usuel (par exemple de type « Banbury »), tous les constituants nécessaires, notamment la matrice élastomérique, la charge renforçante, les éventuels autres additifs divers, à l'exception du système de réticulation. L'incorporation de la charge éventuelle à l'élastomère peut être réalisée en une ou plusieurs fois en malaxant thermomécaniquement. Dans le cas où la charge est déjà incorporée en totalité ou en partie à l'élastomère sous la forme d'un mélange-maître (« masterbatch » en anglais) comme cela est décrit par exemple dans les demandes WO 97/36724 ou WO 99/16600, c'est le mélange-maître qui est directement malaxé et le cas échéant on incorpore les autres élastomères ou charges présents dans la composition qui ne sont pas sous la forme de mélange-maître, ainsi que les éventuels autres additifs divers autres que le système de réticulation. La phase non-productive peut être réalisée à haute température, jusqu'à une température maximale comprise entre 110°C et 200°C, de préférence entre 130°C et 185°C, pendant une durée généralement comprise entre 2 et 10 minutes.
- une seconde phase de travail mécanique (phase dite « productive »), qui peut être réalisée dans un mélangeur externe tel qu'un mélangeur à cylindres, après refroidissement du mélange obtenu au cours de la première phase non-productive jusqu'à une plus basse température, typiquement inférieure à 120°C, par exemple entre 40°C et 100°C. On incorpore alors le système de réticulation, et le tout est alors mélangé pendant quelques minutes, par exemple entre 5 et 15 min.

De telles phases ont été décrites par exemple dans les demandes EP-A-0501227, EP-A-0735088, EP-A-0810258, WO00/05300 ou WO00/05301.

La composition finale ainsi obtenue est ensuite calandrée par exemple sous la forme d'une feuille ou d'une plaque, notamment pour une caractérisation au laboratoire, ou encore extrudée (ou co-extrudée avec une autre composition de caoutchouc) sous la forme d'un semi-fini (ou profilé) de caoutchouc utilisable par exemple comme flanc de pneumatique. Ces produits peuvent ensuite être utilisés pour la fabrication de pneumatiques, selon les techniques connues de l'homme du métier.

La composition peut être soit à l'état cru (avant réticulation ou vulcanisation), soit à l'état cuit (après réticulation ou vulcanisation), peut être un produit semi-fini qui peut être utilisé dans un pneumatique.

La réticulation de la composition peut être conduite de manière connue de l'homme du métier, par exemple à une température comprise entre 130°C et 200°C, sous pression.

### II-7 Article en caoutchouc

La présente invention a également pour objet un article de caoutchouc comprenant au moins une composition selon l'invention. De préférence, l'article de caoutchouc est un pneumatique.

Dans la présente invention, on entend par pneumatique (en anglais « tyre ») un bandage pneumatique ou non pneumatique. Un bandage pneumatique comporte usuellement deux bourrelets destinés à entrer en contact avec une jante, un sommet composé d'au moins une armature de sommet et une bande de roulement, deux flancs, le pneumatique étant renforcé par une armature de carcasse ancrée dans les deux bourrelets. Un bandage non-pneumatique, quant à lui, comporte usuellement une base, conçue par exemple pour le montage sur une jante rigide, une armature de sommet, assurant la liaison avec une bande de roulement et une structure déformable, tels que des rayons, nervures ou alvéoles, cette structure étant disposée entre la base et le sommet. De tels bandages non-pneumatiques ne comprennent pas nécessairement de flanc. Des bandages non-pneumatiques sont décrits par exemples dans les documents WO 03/018332 et FR2898077. Selon l'un quelconque des modes de réalisation de l'invention, le pneumatique selon l'invention est préférentiellement un bandage pneumatique.

Plus particulièrement, l'invention a également pour objet un pneumatique comprenant une composition de caoutchouc selon l'invention, la composition étant présente dans au moins un flanc du pneumatique. La composition selon l'invention peut constituer une partie ou la totalité du flanc du pneumatique.

Le pneumatique selon l'invention peut être destiné à équiper tout type de véhicules, en particulier des véhicules à moteur, sans limitation particulière.

### III- EXEMPLES

### III-1 Mesures et tests utilisés

### III-1.1 Détermination de la microstructure des copolymères Ethylène-Myrcène (Elastomère E1) :

La caractérisation spectrale et les mesures de la microstructure des copolymères Ethylène-Myrcène sont réalisées par spectroscopie de Résonance Magnétique Nucléaire (RMN).

Spectromètre : Pour ces mesures, un spectromètre Bruker Avance III HD 400 MHz est utilisé, équipé d'une sonde Bruker cryo-BBFO z-grad 5 mm.

Expériences : Les expériences 1H sont enregistrées à l'aide d'une impulsion radiofréquence avec un angle de basculement de 30°, le nombre de répétitions est de 128 avec un délai de recyclage de 5 secondes. Les expériences RMN de corrélation 1H-13C HSQC (Heteronuclear Single Quantum Coherence) et HMBC (Heteronuclear Multiple-Bond Correlation) sont enregistrées avec un nombre de répétitions de 128 et un nombre d'incréments de 128. Les expériences sont réalisées à 25°C.

Préparation de l'échantillon : 25 mg d'échantillon sont solubilisés dans 1 mL de chloroforme deutéré (CDCl₃).

Calibration de l'échantillon : Les axes des déplacements chimiques ¹H et ¹³C sont calibrés par rapport à l'impureté protonée du solvant (CHCl₃) à δ_{1H} = 7,2 ppm (pour le signal le plus déblindé) et δ_{13C} = 77 ppm (pour le signal le moins déblindé).

Attribution spectrale pour les copolymères d'éthylène et du 1,3-myrcène : Dans les représentations A, B, C ci-dessous, les symboles R₁ et R₂ représentent les points de rattachement de l'unité à la chaîne polymère. Les signaux des formes d'insertion du 1,3-diène A, B et C ont été observés sur les différents spectres enregistrés. D'après S. Georges et al., (Polymer 55 (2014) 3869-3878), le signal du groupement -CH= n°8" caractéristique de la forme C présente des déplacements chimiques ¹H et ¹³C identiques au groupement - CH= n°3. Les déplacements chimiques des signaux caractéristiques des motifs A, B et C sont présentés dans le Tableau 1. Les motifs A, B et C correspondent respectivement aux unités de configuration 3,4, de configuration 1,2 et de configuration 1,4-trans. Les quantifications ont été effectuées à partir de l'intégration des spectres RMN 1D ¹H à l'aide du logiciel Topspin. Les signaux intégrés pour la quantification des différents motifs sont :
Ethylène : signal à 1,2 ppm correspondant à 4 protons
Myrcène total : signal n°1 (1,59 ppm) correspondant à 6 protons
Forme A : signal n°7 (4,67 ppm) correspondant à 2 protons
Forme B : signal n°8' (5,54 ppm) correspondant à 1 proton

La quantification de la microstructure est réalisée en pourcentage molaire (%molaire) comme suit : %molaire d'un motif = intégrale 1H d'un motif * 100 / Σ (intégrales 1H de chaque motif).

**[Tableau 1]**

| δ1H (ppm) | δ13C (ppm) | Groupement |
|---|---|---|
| 5.54 | 146.4 | 8' |
| 5.07 | 124.6 | 3 + 8" |
| 4.97 - 4.79 | 112.0 | 9' |
| 4.64 | 108.5 | 7 |
| 2.03 | 26.5 | 4 |
| | 31.8 | 5 + 5' + 5" |
| 2.0 - 1.79 | 44.5 | 8 |
| 1.59 | 25.9 et 17.0 | 1 |
| 1.2 | 36.8 - 24.0 | CH₂ éthylène |

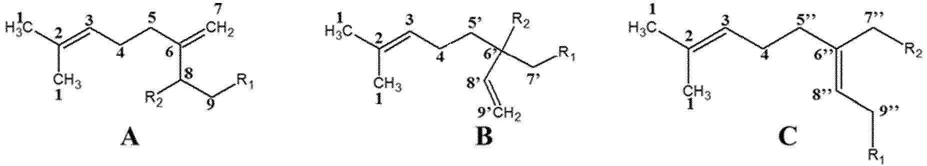

### III-1.2 Détermination de la macrostructure des polymères par chromatographie d'exclusion stérique (SEC) :

a) Principe de la mesure :
   La chromatographie d'exclusion stérique ou SEC (Size Exclusion Chromatography) permet de séparer les macromolécules en solution suivant leur taille à travers des colonnes remplies d'un gel poreux. Les macromolécules sont séparées suivant leur volume hydrodynamique, les plus volumineuses étant éluées en premier. Associée à 3 détecteurs (3D), un réfractomètre, un viscosimètre et un détecteur de diffusion de la lumière à 90°, la SEC permet d'appréhender la distribution de masses molaires absolues d'un polymère. Les différentes masses molaires absolues moyennes en nombre (Mn), en poids (Mw) et l'indice de polydispersité (Ip = Mw/Mn) peuvent également être calculées.
b) Préparation du polymère :
   Chaque échantillon est solubilisé dans du tétrahydrofurane à une concentration d'environ 1 g/L. Puis la solution est filtrée sur filtre de porosité 0,45µm avant injection.
c) Analyse SEC 3D :
   Pour déterminer la masse molaire moyenne en nombre (Mn), et le cas échant la masse molaire moyenne en poids (Mw) et l'indice de polydispersité (Ip) des polymères, on utilise la méthode ci-dessous.

La masse molaire moyenne en nombre (Mn), la masse molaire moyenne en poids (Mw) et l'indice de polydispersité du polymère (ci-après échantillon) sont déterminés de manière absolue, par chromatographie d'exclusion stérique (SEC : Size Exclusion Chromatography) triple détection. La chromatographie d'exclusion stérique triple détection présente l'avantage de mesurer des masses molaires moyennes directement sans calibration.

La valeur de l'incrément d'indice de réfraction dn/dc de la solution de l'échantillon est mesurée en ligne en utilisant l'aire du pic détecté par le réfractomètre (RI) de l'équipement de chromatographie liquide. Pour appliquer cette méthode, il faut vérifier que 100% de la masse d'échantillon est injectée et éluée au travers de la colonne. L'aire du pic RI dépend de la concentration de l'échantillon, de la constante du détecteur RI et de la valeur du dn/dc.

Pour déterminer les masses molaires moyennes, on utilise la solution à 1g/l précédemment préparée et filtrée que l'on injecte dans le système chromatographique. L'appareillage utilisé est une chaîne chromatographique « WATERS alliance ». Le solvant d'élution est le tétrahydrofurane contenant 250 ppm de BHT (2,6-diter-butyle 4-hydroxy toluène), le débit est de 1 mL.min⁻¹, la température du système de 35° C et la durée d'analyse de 60 min. Les colonnes utilisées sont un jeu de trois colonnes AGILENT de dénomination commerciale « PL GEL MIXED B LS». Le volume injecté de la solution de l'échantillon est 100 µL. Le système de détection est composé d'un viscosimètre différentiel Wyatt de dénomination commerciale « VISCOSTAR II », d'un réfractomètre différentiel Wyatt de dénomination commerciale « OPTILAB T-REX » de longueur d'onde 658 nm, d'un détecteur à diffusion de lumière statique multi angle Wyatt de longueur d'onde 658 nm et de dénomination commerciale « DAWN HELEOS 8+ ».

Pour le calcul des masses molaires moyennes en nombre et de l'indice de polydispersité, est intégrée la valeur de l'incrément d'indice de réfraction dn/dc de la solution de l'échantillon obtenue ci-dessus. Le logiciel d'exploitation des données chromatographiques est le système « ASTRA de Wyatt ».

### III-1.3 Propriétés dynamiques

Les propriétés dynamiques G'(10%) et G''max sont mesurées à une température de 23°C sur un viscoanalyseur (Metravib VA4000), selon la norme ASTM D 5992-96. On a enregistré la réponse d'un échantillon de composition réticulée (éprouvette cylindrique de 4 mm d'épaisseur et de 400 mm² de section), soumis à une sollicitation sinusoïdale en cisaillement simple alterné, à la fréquence de 10Hz, dans les conditions définies de température par exemple à 23°C selon la norme ASTM D 1349-99. On effectue un balayage en amplitude de déformation de 0,1 à 50% (cycle aller), puis de 50% à 0,1% (cycle retour). Les résultats exploités sont le module de cisaillement dynamique G' et le module visqueux G''. Pour le cycle retour, on indique la valeur maximale de G' 'observée, notée G''max, ainsi que le module de cisaillement dynamique G'(10%) à 10% de déformation, à 23°C.

On rappelle que, de manière bien connue de l'homme du métier, la valeur de G'(10%) à 23°C est représentative de la rigidité du matériau. Les résultats de performance G'(10%) à 23°C sont exprimés en base 100, la valeur 100 étant attribuée au témoin. Pour G'(10%) à 23°C un résultat supérieur à 100 indique que la composition de l'exemple considéré est moins rigide, traduisant, pour un flanc de pneumatique subissant une déformation imposée, une meilleure endurance.

### III-1.4 Déchirabilité

Les indices de déchirabilité sont mesurés à 60°C. On détermine notamment la force à exercer pour obtenir la rupture (FRD, en MPa (en N/mm²)) et on mesure la déformation à rupture (DRD, en %) sur une éprouvette de dimensions 10 x 85 x 2,5 mm entaillée au centre de sa longueur par 3 entailles sur une profondeur de 3 mm, pour provoquer la rupture de l'éprouvette. Ainsi on peut déterminer l'Energie pour provoquer la rupture (Energie Rupture) de l'éprouvette qui est le produit de la FRD et de la DRD.

### III-2 Synthèse des polymères :

Dans la synthèse de polymères, tous les réactifs sont obtenus commercialement exceptés les métallocènes. Le butyloctylmagnésium BOMAG (20% dans l'heptane, C = 0,88 mol.L⁻¹) provient de Chemtura et est stocké dans un tube de Schlenk sous atmosphère inerte. L'éthylène, de qualité N35, provient de la société Air Liquide et est utilisé sans purification préalable. Le myrcène (pureté ≥ 95%) est obtenu chez Sigma-Aldrich.

Le copolymère d'éthylène et de myrcène : élastomère E1 a été synthétisé selon le mode opératoire décrit ci-après :
Dans un réacteur contenant à 80°C du méthylcyclohexane, ainsi que de l'éthylène (Et) et du myrcène (Myr) dans les proportions indiquées dans le Tableau 3, on ajoute du butyloctylmagnésium (BOMAG) pour neutraliser les impuretés du réacteur, puis le système catalytique (voir Tableau 2). A ce moment, la température de réaction est régulée à 80°C et la réaction de polymérisation démarre. La réaction de polymérisation se déroule à une pression constante de 8 bars. Le réacteur est alimenté tout au long de la polymérisation en éthylène et en myrcène (Myr) dans les proportions définies dans le Tableau 3. La réaction de polymérisation est stoppée par refroidissement, dégazage du réacteur et ajout d'éthanol. Un anti-oxydant est ajouté à la solution de polymère. Le copolymère est récupéré par séchage en étuve sous vide jusqu'à masse constante. Le système catalytique est un système catalytique préformé. Il est préparé dans le méthylcyclohexane à partir d'un métallocène, le [Me₂SiFlu₂Nd(µ-BH₄)₂Li(THF)], d'un co-catalyseur, le butyloctylmagnésium (BOMAG), et d'un monomère de préformation, le 1,3-butadiène, dans les teneurs indiquées dans le Tableau 2. Il est préparé selon une méthode de préparation conforme au paragraphe II.1 de la demande de brevet WO 2017/093654 A1.

La microstructure de l'élastomère E1 et ses propriétés figurent dans le Tableau 3. Pour la microstructure, le Tableau 3 indique les taux molaires des unités éthylène (Eth) et des unités myrcène. Y figure également la proportion molaire des unités myrcène selon qu'elles sont de configuration 1,4, de configuration 1,2 et 3,4.

**[Tableau 2]**

| Synthèse | E1 |
|---|---|
| Concentration métallocène (mmol/L) | 0,09 |
| Concentration agent alkylant (mmol/L) | 0,17 |
| Ratio molaire monomère préformation/ métal Nd | 90 |
| Composition de l'alimentation (%mol Et/Myr) | 75/25 |

**[Tableau 3]**

| Elastomère | E1 |
|---|---|
| Et (%mol) | 75 |
| Myr (%mol) | 25 |
| Myr 1,4 (%mol/ %mol Myr) | 7 |
| Myr 1,2 (%mol/ %mol Myr) | 1 |
| Myr 3,4 (%mol/ %mol Myr) | 17 |
| Tg (°C) | -60 |
| Mn (g/mol) | 364 000 |

### III-3 Préparation des compositions

Dans les exemples qui suivent, les compositions caoutchouteuses ont été réalisées comme décrit au point II-6 ci-dessus. En particulier, la phase « non-productive » a été réalisée dans un mélangeur de 0,4 litres pendant 3,5 minutes, pour une vitesse moyenne de palettes de 50 tours par minute jusqu'à atteindre une température maximale de tombée de 160°C. La phase « productive » a été réalisée dans un outil à cylindre à 23°C pendant 5 minutes. La réticulation de la composition a été conduite à une température de 150°C, sous pression, pendant une durée de 15 minutes.

### III-3 Essais de compositions de caoutchouc

Les exemples présentés ci-dessous ont pour objet de comparer les performances de déchirabilité et de rigidité d'une composition conforme à l'invention (C1) à une composition témoin (T1).

Le Tableau 4 présente les compositions testées (en pce), ainsi que les résultats obtenus.

**[Tableau 4]**

| | **T1** | **C1** |
|---|---|---|
| NR (1) | 60 | 60 |
| Elastomère E1 (2) | 40 | 40 |
| Noir de carbone (3) | 29 | 29 |
| Plastifiant (4) | 20 | - |
| Plastifiant (5) | - | 20 |
| TMQ (6) | 1 | 1 |
| Cire Ozone (7) | 1 | 1 |
| 6PPD (8) | 3 | 3 |
| ZnO (9) | 1 | 1 |
| Acide Stéarique (10) | 2 | 2 |
| Soufre | 1,49 | 1,49 |
| CBS (11) | 0,75 | 0,75 |
| | | |
| Rigidité | 100 | 108 |
| *G'10% Retour 10Hz 23°C* | | |
| Déchirabilité | 100 | 345 |
| *Energie rupture (FDR x DRD)* | | |

| | | |
|---|---|---|
| (1) Caoutchouc naturel (2) Elastomère E1 préparé selon le procédé décrit au point III-2 ci-dessus (3) Noir de carbone de grade N550 selon la norme ASTM D-1765 (4) Huile paraffinique « Tudalen 1968 » de la société Klaus Dahleke (5) Huile « Plasthall 100 » de la société Hallstar (Tg = -110°C) (6) 2,2,4-triméthyl-1,2-dihydroquinoline « Pilnox TMQ » de la société Nocil (7) Cire anti-ozone « VARAZON 4959 » de la société Sasol Wax (8) N-1,3-diméthylbutyl-N-phénylparaphénylènediamine « Santoflex 6-PPD » de la société Flexsys (9) Oxyde de zinc de grade industriel de la société Umicore (10) Acide stéarique « Pristerene 4931 » de la société Uniqema (11) N-cyclohexyl-2-benzothiazyle sulfénamide « Santocure CBS » de la société Flexsys | | |

Les résultats présentés dans le Tableau 4 ci-dessus montrent que l'utilisation du plastifiant spécifique permet d'améliorer à la fois la résistance à la déchirabilité et l'endurance de composition de caoutchouc à base d'un élastomère diénique fortement saturé. Les inventeurs ont également mis en évidence que malgré l'augmentation de l'hystérèse de la composition, le compromis global de performances que sont la résistance à la déchirabilité, l'endurance et la résistance, n'était pas dégradé, voire amélioré. Le compromis de ces performances peut être considéré comme étant la moyenne arithmétique des résultats présentés en base 100.

## Revendications

1. Composition de caoutchouc à base d'au moins :
- 20 à 50 pce de copolymère contenant des unités éthylène et des unités d'un 1,3-diène de formule (I), les unités éthylène dans le copolymère représentant entre 50% et 95% en mole des unités monomères du copolymère,
CH₂=CR-CH=CH₂ (I)
le symbole R représentant une chaîne hydrocarbonée ayant 3 à 20 atomes de carbone ;
- 50 à 80 pce de polyisoprène comportant un taux massique de liaisons 1,4-cis d'au moins 90% de la masse du polyisoprène ;
- une charge renforçante ;
- un plastifiant ester d'huile de tall ; et
- un système de vulcanisation.

2. Composition de caoutchouc selon la revendication 1, dans laquelle le copolymère contient des unités éthylène qui représentent de 60% à 90%, de préférence de 70% à 85%, en moles des unités monomères du copolymère.

3. Composition de caoutchouc selon l'une quelconque des revendications précédentes, dans laquelle le 1,3-diène de formule (I) est le myrcène, le β-farnésène ou un mélange de myrcène et de β-farnésène, de préférence le myrcène.

4. Composition de caoutchouc selon l'une quelconque des revendications précédentes, dans laquelle le copolymère contient des unités du 1,3-diène de formule (I) qui représentent entre 10% et 40%, de préférence entre 15% et 30%, en moles des unités monomères du copolymère.

5. Composition de caoutchouc selon l'une quelconque des revendications précédentes, dans laquelle le taux du copolymère est compris dans un domaine allant de 20 à 45 pce, et dans laquelle le polyisoprène est présent à un taux compris dans un domaine allant de 55 à 80 pce.

6. Composition de caoutchouc selon l'une quelconque des revendications précédentes, dans laquelle le polyisoprène est choisi dans le groupe constitué par le caoutchouc naturel, les polyisoprènes de synthèse et leurs mélanges, de préférence le polyisoprène est un caoutchouc naturel.

7. Composition de caoutchouc selon l'une quelconque des revendications précédentes, dans laquelle la charge renforçante comprend plus de 50% en masse de noir de carbone.

8. Composition de caoutchouc selon l'une quelconque des revendications précédentes, dans laquelle le taux de charge renforçante est compris dans un domaine allant de 15 à 80 pce, de préférence de 20 à 55 pce, de préférence de 25 à 45 pce.

9. Composition de caoutchouc selon l'une quelconque des revendications précédentes, dans laquelle le taux de plastifiant ester d'huile de tall est compris dans un domaine allant de 5 à 50 pce, de préférence de 7 à 40 pce et plus préférentiellement de 8 à 30 pce.

10. Composition de caoutchouc selon l'une quelconque des revendications précédentes, dans laquelle le plastifiant ester d'huile de tall est un composé de formule Tl(OR¹)₃ dans lequel R¹ est un alkyl linéaire ou branché et Tl représente l'huile de tall.

11. Composition de caoutchouc selon la revendication 10, dans laquelle R¹ est un alkyl comprenant de 4 à 20 atomes de carbone, de préférence de 6 à 12 atomes de carbone et plus préférentiellement de 6 à 10 atomes de carbone.

12. Composition de caoutchouc selon l'une quelconque des revendications 10 ou 11, dans laquelle le radical R¹ est un alkyl ramifié, et plus préférentiellement R¹ est un radical isooctyle.

13. Composition de caoutchouc selon l'une quelconque des revendications précédentes, dans laquelle le plastifiant ester d'huile de tall est le composé isooctyl tallate.

14. Article en caoutchouc comprenant une composition de caoutchouc définie à l'une quelconque des revendications 1 à 13.

15. Pneumatique comprenant une composition de caoutchouc définie à l'une quelconque des revendications 1 à 13, la composition étant présente dans au moins un flanc du pneumatique.

## Patentansprüche

1. Kautschukzusammensetzung auf Basis von mindestens:
- 20 bis 50 phe eines Copolymers, das Ethylen-Einheiten und Einheiten eines 1,3-Diens der Formel (I) enthält, wobei die Ethylen-Einheiten in dem Copolymer zwischen 50 und 95 Mol-% der Monomereinheiten des Copolymers ausmachen,
CH₂=CR-CH=CH₂ (I)
wobei das Symbol R für eine Kohlenwasserstoffkette mit 3 bis 20 Kohlenstoffatomen steht;
- 50 bis 80 phe Polyisopren mit einem Massenanteil an 1,4-cis-Bindungen von mindestens 90 % der Masse des Polyisoprens;
- einem verstärkenden Füllstoff;
- einem Tallölester-Weichmacher; und
- einem Vulkanisationssystem.

2. Kautschukzusammensetzung nach Anspruch 1, wobei das Copolymer Ethylen-Einheiten enthält, die 60 bis 90 Mol-%, vorzugsweise 70 bis 85 Mol-%, der Monomereinheiten des Copolymers ausmachen.

3. Kautschukzusammensetzung nach einem der vorhergehenden Ansprüche, wobei es sich bei dem 1,3-Dien der Formel (I) um Myrcen, β-Farnesen oder eine Mischung von Myrcen und β-Farnesen, vorzugsweise Myrcen, handelt.

4. Kautschukzusammensetzung nach einem der vorhergehenden Ansprüche, wobei das Copolymer Einheiten des 1,3-Diens der Formel (I) enthält, die zwischen 10 und 40 Mol-%, vorzugsweise zwischen 15 und 30 Mol-%, der Monomereinheiten des Copolymers ausmachen.

5. Kautschukzusammensetzung nach einem der vorhergehenden Ansprüche, wobei der Gehalt des Copolymers in einem Bereich von 20 bis 45 phe liegt und wobei das Polyisopren in einem Gehalt in einem Bereich von 55 bis 80 phe vorliegt.

6. Kautschukzusammensetzung nach einem der vorhergehenden Ansprüche, wobei das Polyisopren aus der Gruppe bestehend aus Naturkautschuk, synthetischen Polyisoprenen und Mischungen davon ausgewählt ist, wobei es sich bei dem Polyisopren vorzugsweise um Naturkautschuk handelt.

7. Kautschukzusammensetzung nach einem der vorhergehenden Ansprüche, wobei der verstärkende Füllstoff mehr als 50 Massen-% Ruß umfasst.

8. Kautschukzusammensetzung nach einem der vorhergehenden Ansprüche, wobei der Gehalt an verstärkendem Füllstoff in einem Bereich von 15 bis 80 phe, vorzugsweise von 20 bis 55 phe, bevorzugt von 25 bis 45 phe, liegt.

9. Kautschukzusammensetzung nach einem der vorhergehenden Ansprüche, wobei der Gehalt an Tallölester-Weichmacher in einem Bereich von 5 bis 50 phe, vorzugsweise von 7 bis 40 phe und weiter bevorzugt von 8 bis 30 phe liegt.

10. Kautschukzusammensetzung nach einem der vorhergehenden Ansprüche, wobei es sich bei dem Tallölester-Weichmacher um eine Verbindung der Formel Tl(OR¹)₃ handelt, in der R¹ ein lineares oder verzweigtes Alkyl ist und T1 für Tallöl steht.

11. Kautschukzusammensetzung nach Anspruch 10, wobei R¹ ein Alkyl mit 4 bis 20 Kohlenstoffatomen, vorzugsweise 6 bis 12 Kohlenstoffatomen und weiter bevorzugt 6 bis 10 Kohlenstoffatomen ist.

12. Kautschukzusammensetzung nach einem der Ansprüche 10 oder 11, wobei der Rest R¹ ein verzweigtes Alkyl ist und weiter bevorzugt R¹ ein Isooctylrest ist.

13. Kautschukzusammensetzung nach einem der vorhergehenden Ansprüche, wobei es sich bei dem Tallölester-Weichmacher um die Verbindung Isooctyltallat handelt.

14. Kautschukgegenstand, umfassend eine Kautschukzusammensetzung gemäß einem der Ansprüche 1 bis 13.

15. Reifen, umfassend eine Kautschukzusammensetzung gemäß einem der Ansprüche 1 bis 13, wobei die Zusammensetzung in mindestens einer Seitenwand des Reifens vorliegt.

## Claims

1. Rubber composition based on at least:
- 20 to 50 phr of a copolymer containing ethylene units and units of a 1,3-diene of formula (I), the ethylene units in the copolymer representing between 50 mol% and 95 mol% of the monomer units of the copolymer,
CH₂=CR-CH=CH₂ (I)
the symbol R representing a hydrocarbon chain containing 3 to 20 carbon atoms;
- 50 to 80 phr of polyisoprene comprising a content by weight of cis-1,4- bonds of at least 90% of the weight of the polyisoprene;
- a reinforcing filler;
- a tall oil ester plasticizer; and
- a vulcanization system.

2. Rubber composition according to Claim 1, wherein the copolymer contains ethylene units which represent from 60 mol% to 90 mol%, preferably from 70 mol% to 85 mol%, of the monomer units of the copolymer.

3. Rubber composition according to either one of the preceding claims, wherein the 1,3-diene of formula (I) is myrcene, β-farnesene or a mixture of myrcene and β-farnesene, preferably myrcene.

4. Rubber composition according to any one of the preceding claims, wherein the copolymer contains units of the 1,3-diene of formula (I) which represent between 10 mol% and 40 mol%, preferably between 15 mol% and 30 mol%, of the monomer units of the copolymer.

5. Rubber composition according to any one of the preceding claims, wherein the copolymer content is within a range extending from 20 to 45 phr, and in which the polyisoprene is present in a content within a range extending from 55 to 80 phr.

6. Rubber composition according to any one of the preceding claims, wherein the polyisoprene is selected from the group consisting of natural rubber, synthetic polyisoprenes and mixtures thereof; preferably, the polyisoprene is a natural rubber.

7. Rubber composition according to any one of the preceding claims, wherein the reinforcing filler comprises more than 50% by weight of carbon black.

8. Rubber composition according to any one of the preceding claims, wherein the content of reinforcing filler is within a range extending from 15 to 80 phr, preferably from 20 to 55 phr, preferably from 25 to 45 phr.

9. Rubber composition according to any one of the preceding claims, wherein the content of tall oil ester plasticizer is in the range of 5 to 50 phr, preferably 7 to 40 phr, and more preferably 8 to 30 phr.

10. Rubber composition according to any one of the preceding claims, wherein the tall oil ester plasticizer is a compound of formula Tl(OR¹)₃, in which R¹ is a linear or branched alkyl group and Tl represents tall oil.

11. Rubber composition according to claim 10, wherein R¹ is an alkyl group comprising from 4 to 20 carbon atoms, preferably from 6 to 12 carbon atoms, and more preferably from 6 to 10 carbon atoms.

12. Rubber composition according to any one of claims 10 or 11, wherein the radical R¹ is a branched alkyl group, and more preferably R¹ is an isooctyl radical.

13. Rubber composition according to any one of the preceding claims, wherein the tall oil ester plasticizer is the compound isooctyl tallate.

14. Rubber article comprising a rubber composition defined in any one of Claims 1 to 13.

15. Tyre comprising a rubber composition defined in any one of Claims 1 to 13, the composition being present in at least one sidewall of the tyre.
